# FASCICULE DE BREVET EUROPEEN

(11) **EP 0 822 327 B1**
(45) Date de publication et mention de la délivrance du brevet: **27.08.2003**
(21) Numéro de dépôt: 97401807.9
(22) Date de dépôt: 28.07.1997
(51) Int. Cl.: F02K 1/70, F02K 1/72

(54) **Inverseur de poussée de turboréacteur à portes formant écopes**
Schubumkehrvorrichtung für ein Bläsertriebwerk mit Umkehrklappen, die Kanäle formen
Thrust reverser for a turbofan engine with thrust reverser doors which form scoops

(30) Priorité: 01.08.1996 FR 9609705
(43) Date de publication de la demande: 04.02.1998
(73) Titulaire: Hispano-Suiza, 75015 Paris (FR)
(72) Inventeur: Gonidec, Patrick, 76290 Montivilliers (FR); Vauchel, Guy Bernard, 76610 Le Havre (FR)
(74) Mandataire: Berrou, Paul

(56) Documents cités:
- FR-A- 924 283
- FR-A- 1 529 361
- FR-A- 2 111 726
- FR-A- 2 133 520
- FR-E- 91 242
- GB-A- 1 380 419
- GB-A- 2 254 589
- US-A- 2 944 394
- US-A- 2 997 845
- US-A- 3 511 055
- US-A- 3 600 894
- US-A- 3 739 582

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

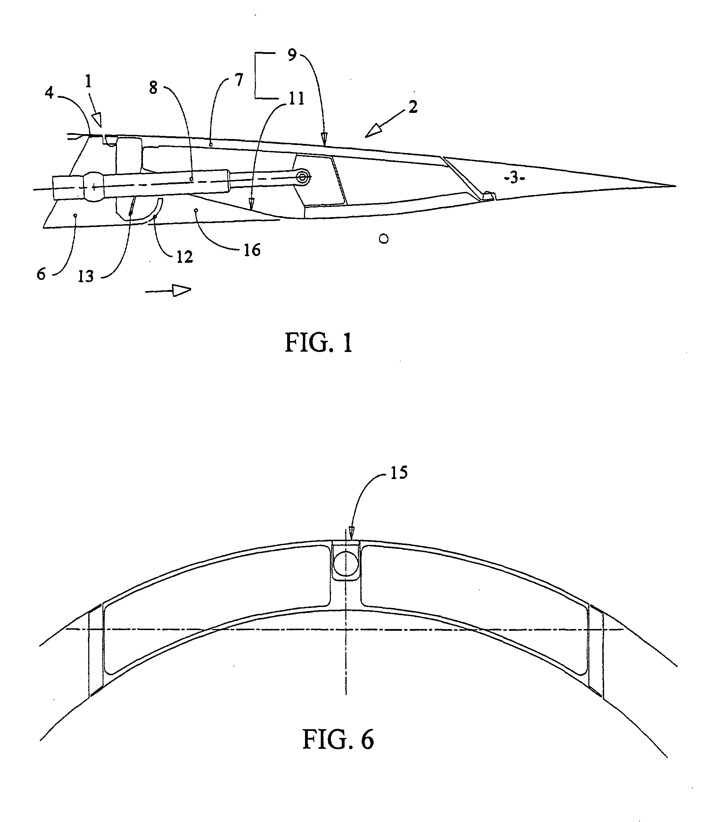

La figure 1 des dessins joints montre un exemple connu de réalisation d'un inverseur de poussée de ce type, appliqué à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie-des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir, en effet, la section totale de ces passages doit être supérieure à la section du conduit dans un plan situé en amont des portes, ceci à cause des pertes en charge engendrées par la déviation du flux, ceci dans le cas où la section de fuite (partie aval du conduit non obstruée par la partie aval des portes), est minimisée de façon à obtenir une contre poussée convenable.

L'inconvénient majeur décrit ci-dessus se traduit suivant les deux aspects suivants :
- le fait que les portes tendent à s'ouvrir est un inconvénient du point de vue de la sécurité. Des portes sur lesquelles l'action de la pression tendrait à les maintenir fermées (non déployées), rendrait le dispositif plus sûr, de même que des portes sur lesquelles l'action de la pression tendrait à les refermer lorsque celles-ci sont dans une position telle que la poussée n'est pas encore inversée, même si elle est partiellement détruite (nous reviendrons sur ce dernier point)
- l'action de la pression sur les portes est dans certains exemples connus telle que dans certains cas à prendre en compte dans le dimensionnement de l'inverseur, des efforts très importants transitent dans les vérins entre leurs points d'attache sur la partie amont de la structure fixe et sur les portes. Il en résulte une masse importante de la structure, du système de commande des portes et de verrouillage de celles-ci, et des portes elles-mêmes.

Par ailleurs, US 3.612.401 propose un panneau externe veine articulé à son aval et dont le bord amont pivote dans le canal annulaire. Dans ce cas il n'y a pas de porte monobloc et le panneau externe manoeuvre vers l'externe nacelle indépendamment du panneau interne, ce qui assure le guidage du flux vers l'avant de la nacelle.

En outre FR-A 2.121.563 propose une tuyère monobloc dans laquelle circule le flux en mode jet inversé mais dans ce cas lors du pivotement, le bord aval de la tuyère pénètre dans le canal annulaire en ouvrant une trappe aval. Ceci permet de ne pas avoir d'action du flux en jet direct sur le conduit. Dans ce concept, tout le débit du jet inversé passe au travers de la tuyère et une partie de celle-ci déborde de l'externe nacelle en jet inversé.

On connaît par FR-A-2111726 un inverseur de poussée à obstacles constitué par des volets pivotant autour d'un axe de rotation aval. Les volets sont associés à des grilles d'aubages disposées sur la structure fixe et laissant en jet direct des ouvertures sur les lignes extérieures de nacelle.

US 2 997 845 décrit des éléments comportant un espace intérieur formant tuyère en position d'inversion mais qui sont disposés en jet direct dans la veine de circulation du flux primaire d'un turboréacteur pour obtenir un effet de silencieux.

L'objet de l'invention est de proposer un moyen qui permet d'accroître la sécurité et/ou de réduire la masse de ce type d'inverseur ou en améliorer les performances en jet inversé. Les buts sont atteints conformément à l'invention par un inverseur de poussée à portes pivotantes du type précité caractérisé en ce que au moins une porte comporte un espace intérieur formant tuyère, entre une première ouverture aménagée au bord amont de porte entre un panneau intérieur et un panneau extérieur et une deuxième ouverture ménagée du côté aval entre un rebord aval et ledit panneau extérieur, la deuxième ouverture étant recouverte en position de jet direct par un élément en casquette solidaire de la partie aval de la structure fixe de l'inverseur, de manière que, en position de jet direct, les efforts exercés par le flux sur ledit panneau intérieur maintiennent la porte dans sa position fermée puis en début d'ouverture, les efforts exercés par le flux sur ledit panneau intérieur conjugués aux efforts exercés par le flux sur la surface interne du panneau extérieur de porte rendent ladite porte auto-refermante et en position de jet inversé, au moins une partie du flux dévié emprunte ledit espace intérieur de porte formant écope, ladite porte restant entièrement à l'intérieur des lignes extérieures de nacelle.

D'autres caractéristiques et avantages de l'invention seront mieux compris à la lecture de la description qui va suivre des modes de réalisation de l'invention, en référence aux dessins annexés sur lesquels :
- La figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description ;
- la figure 2 représente, dans une vue analogue à celle de la figure 1 un inverseur de poussée à portes écope, en position jet direct, selon un mode de réalisation de l'invention ;
- la figure 3 représente le mode de réalisation de l'invention décrit suivant la figure 2, en mode jet inversé ;
- les figures 4 et 5 représentent un mode d'entraînement de la porte par vérin central en position jet direct et jet inversé ;
- la figure 6 représente la section VI VI en mode jet direct ;
- les figures 7 et 8 représentent un mode d'entraînement de la porte par l'aval en mode jet direct et jet inversé ;
- les figures 9 et 10 représentent un mode d'entraînement de la porte par un système d'embiellage en mode jet direct et jet inversé ;
- les figures 11 et 12 représentent un autre mode de réalisation de l'invention en mode jet direct et jet inversé ;
- les figures 13 et 14 représentent un système de casquette mobile liée à la porte ;
- les figures 15 à 17 représentent des exemples de réalisation de portes ;
- la figure 18 représente une vue de l'avant en perspective d'une demi-nacelle ;
- la figure 19 représente une vue latérale en perspective d'une demi-nacelle ;
- les figures 20 et 21 représentent une variante de réalisation de l'invention en mode jet direct et jet inversé.
- la figure 22 représente, dans une vue analogue à celle de la figure 1 un inverseur de poussée à portes écopes en position jet direct, selon un autre mode de réalisation de l'invention
- la figure 23 représente le mode de réalisation de l'invention décrit suivant la figure 22 en mode jet inversé ;
- la figure 24 représente une vue en perspective avant de l'inverseur de poussée représenté à la figure 22 ;
- la figure 25 représente une vue en perspective avant de l'inverseur de poussée représenté à la figure 23 ;
- la figure 26 représente, dans une vue analogue de la figure 1 un inverseur de poussée à portes écopes, en position jet direct, selon un autre mode de réalisation de l'invention ;
- la figure 27 représente le mode de réalisation de l'invention décrit suivant la figure 26 en mode jet inversé ;
- la figure 28 représente une vue en perspective avant de l'inverseur de poussée représenté à la figure 26 ;
- la figure 29 représente une vue en perspective avant de l'inverseur de poussée représenté à la figure 27 ;
- les figures 30 et 31 représentent un exemple d'aide au guidage du flux, associé à l'inverseur de poussée en mode jet direct et jet inversé ;
- les figures 32 et 33 représentent un exemple d'aide au guidage du flux, associé à l'inverseur de poussée, en mode jet direct et jet inversé ;
- la figure 34 représente, dans une vue analogue de la figure 1 un inverseur de poussée à portes écopes associées à l'élément mobile, en position jet direct, selon un autre mode de réalisation de l'invention ;
- la figure 35 représente le mode de réalisation de l'invention décrit suivant la figure 34 en mode jet inversé;
- la figure 36 représente, dans une vue analogue de la figure 1, un inverseur de poussée à portes écopes, en position jet direct, selon un autre mode de l'invention ;
- la figure 37 représente le mode de l'invention décrit en figure 36 en phase de réglage de section de tuyère ;
- la figure 38 représente le mode de l'invention décrit en figure 36 en phase d'inversion de jet.

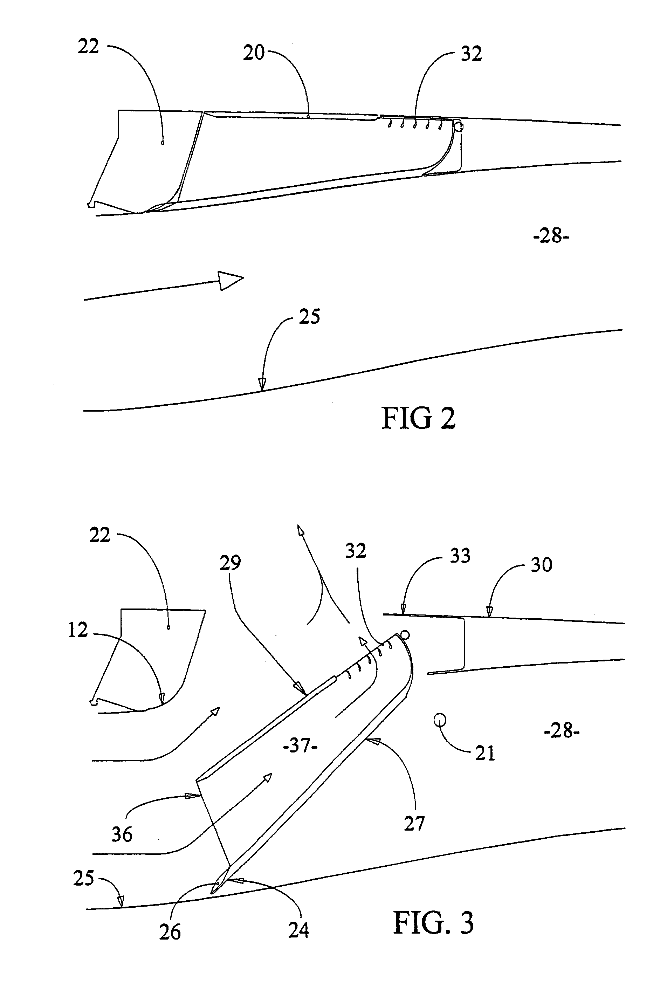

Selon un mode de réalisation de l'invention représenté sur les figures 2 et 3, une porte tuyère 20, articulée autour d'un axe de rotation 21 porté par les poutres de la structure fixe 22, est manoeuvrée par un moyen d'entraînement 23 qui peut être mécanique, hydraulique ou électrique, dans le sens opposé à celui des aiguilles d'une montre de telle façon que la partie amont 24 de la porte tuyère 20 vient au voisinage en amont du capot externe 25 du moteur. Le vérin 23, selon le point d'accrochage sur la porte 20 par rapport au point pivot 22, peut être soit tirant, soit poussant.
En position jet direct, l'étanchéité est assurée par un joint 26.

Le panneau interne 27 de la porte tuyère 20 forme une partie de la veine externe du conduit annulaire 28. Une partie du panneau externe 29 de la porte tuyère forme une partie de la nacelle externe 30.

En position jet inversé, la partie amont de la porte tuyère 20 vient dans la veine 28 et "écope" par une première ouverture 36 une partie du flux. Celui-ci est canalisé dans un espace intérieur 37 formant tuyère ménagé dans la porte 20 jusqu'à une deuxième ouverture 32 de la porte tuyère 20. La longueur et largeur de cette ouverture 32 est définie pour répondre au besoin de l'efficacité de l'inversion et l'espace intérieur 37 est ménagé pour permettre le passage de débit souhaité.

En jet direct la surface externe du panneau interne 27 de porte 20 reçoit la pression du flux qui maintient la porte automatiquement fermée.
En début d'ouverture lorsqu'une partie du flux s'engouffre dans la structure interne de la porte 20, celle-ci reste auto-refermante pendant une certaine course angulaire. En effet, lorsque la porte n'est plus en contact étanche avec la structure fixe la pression du flux s'applique sur l'interne du panneau interne 27 et donne une composante d'ouverture à la porte 20, cette composante est annulée et inversée par la pression du flux appliquée sur l'externe du panneau interne 27 associée à la pression du flux appliquée sur l'interne du panneau externe 29 de la porte 20.
L'angle d'ouverture de la porte 20 pendant lequel celle-ci reste auto-refermante est dépendant de la géométrie de l'externe du panneau interne 27 qui reçoit la pression du flux passant entre le bord amont 24 du panneau interne 27 et le capot externe 25 du moteur jusqu'à ce que sa composante de refermeture ne permette plus en association avec la composante de refermeture de l'interne du panneau externe 29 de contrer la composante d'ouverture appliquée sur l'interne du panneau interne 27 de la porte 20.

On comprend l'importance de la structure fermée de porte, de la dimension de la surface interne du panneau externe 29 et du positionnement du centre de pression de cette surface par rapport au pivot 21 de la porte 20.

On remarque qu'en position jet inversé aucune partie de la porte tuyère 20 ne dépasse de la nacelle 30, ceci peut être intéressant dans le cas de nacelle très proche du sol ou géométriquement trop proche de la structure aile ou fuselage.

En jet inversé une partie du flux passe entre le panneau externe 29 de la porte tuyère 20 et le bord de déviation 12 de la structure 1. La direction du jet est redirigé vers l'avant de la nacelle sous l'action du jet sortant de la porte tuyère 20.

En jet direct la casquette 33, formée d'une partie du capot de l'externe 30 de la nacelle, recouvre et carène l'ouverture 32 de la porte tuyère 20. Cette casquette peut déborder plus ou moins de l'ouverture 32 de la porte tuyère 20 en position jet inversé pour permettre une action plus ou moins prononcée sur le flux d'inversion. Le détourage de la casquette 33 peut être à bords parallèles entre-eux ou évolutif. Elle peut être réalisée en une ou plusieurs parties.

Ce système peut être associé à des portes d'inverseur standard de taille proche ou différente afin d'assurer un meilleur pilotage de nappes et une perturbation moindre de la contrôlabilité de l'avion par l'écoulement inversé en particulier en cas de déploiement intempestif.

Les portes écopes peuvent en outre être différentes en taille entre elles, en largeur, en longueur, elles peuvent avoir des positions de pivots différentes entre elles, les angles d'ouverture peuvent également être différent entre chaque porte. Ceci afin d'assurer un pilotage optimal et une perturbation minimale sur l'écoulement de voilure.

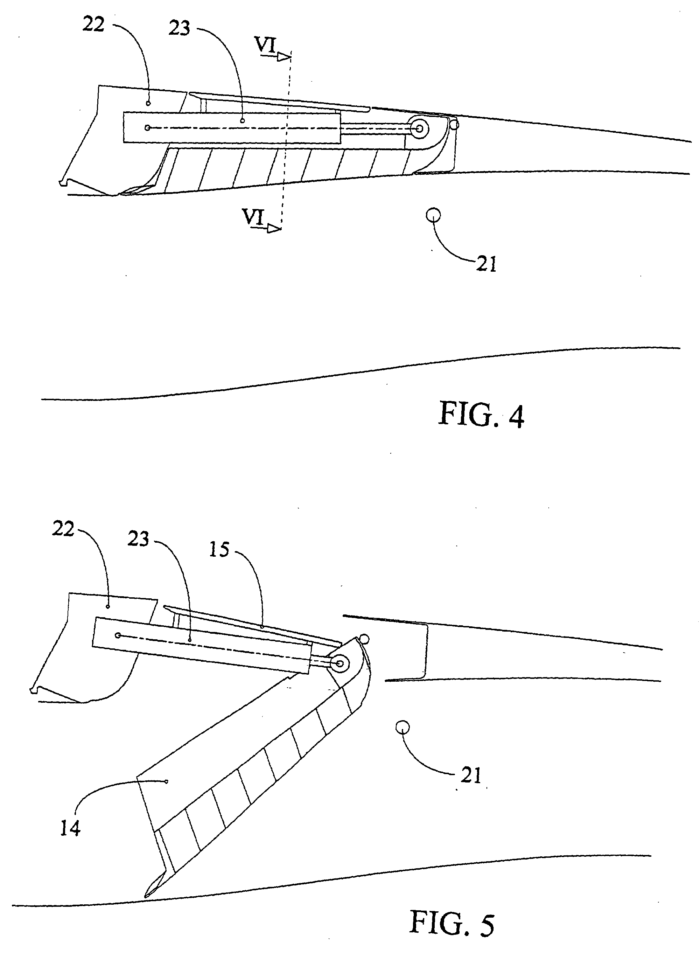

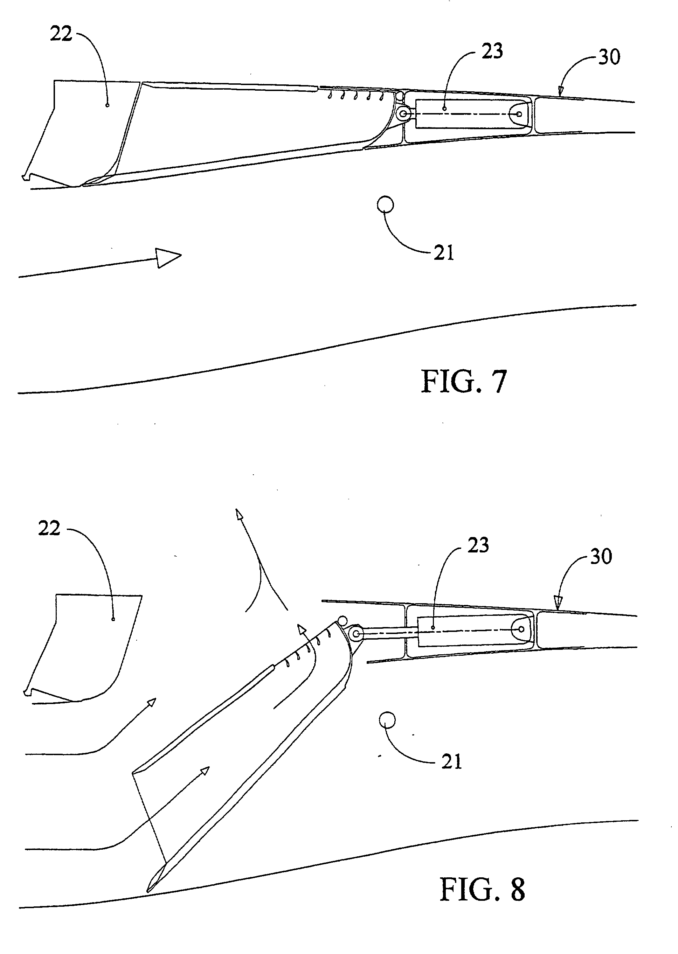

Suivant les figures 4 à 6, au moins un vérin 23 associé à la structure fixe 1 manoeuvre la porte tuyère 20. Un espace 14 est pratiqué dans la porte pour loger le vérin. Un carénage 15 associé au vérin 23 permet de lisser l'externe de la nacelle 11 en jet direct.

La porte 20 peut aussi être manoeuvrée par un ou deux vérins installés dans la (les) poutre(s) entraînant les portes tuyères 20 par les côtés.

Les figures 7 et 8 montrent un exemple de manoeuvre de la porte tuyère 20 réalisée par un ou des vérins 23 installé(s) dans la partie aval de la structure fixe 22 de la nacelle. Suivant la position de l'accrochage du vérin sur la porte 20, celui-ci peut être compris dans un espace pratiqué dans ladite porte.

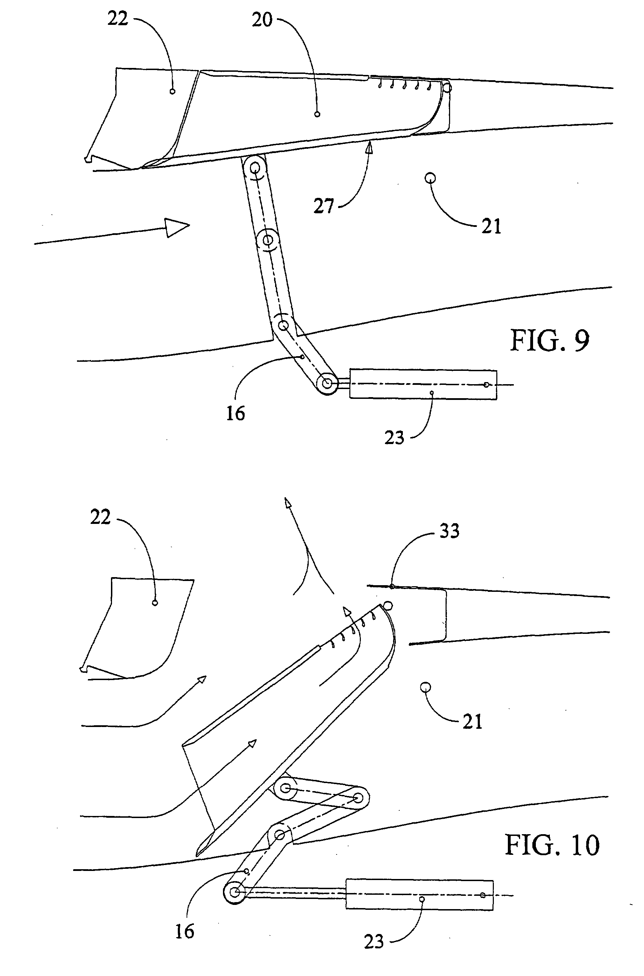

Les figures 9 et 10 montrent un exemple d'entraînement réalisé par un embiellage 16 reliant le système d'entraînement, ici un vérin 23, au panneau interne 27 de la porte tuyère 20.

L'avantage réside dans la sécurité accrue de la porte en position jet direct. Dans cette position, la porte se trouve en arc-boutement sur un système mécanique, interdisant la manoeuvre inopinée de la porte.

La structure fixe 22 ne supporte plus le vérin et donc ses efforts résultants, elle peut être allégée en conséquence.

Le vérin peut être tirant ou poussant suivant l'orientation donnée dans le compartiment moteur.

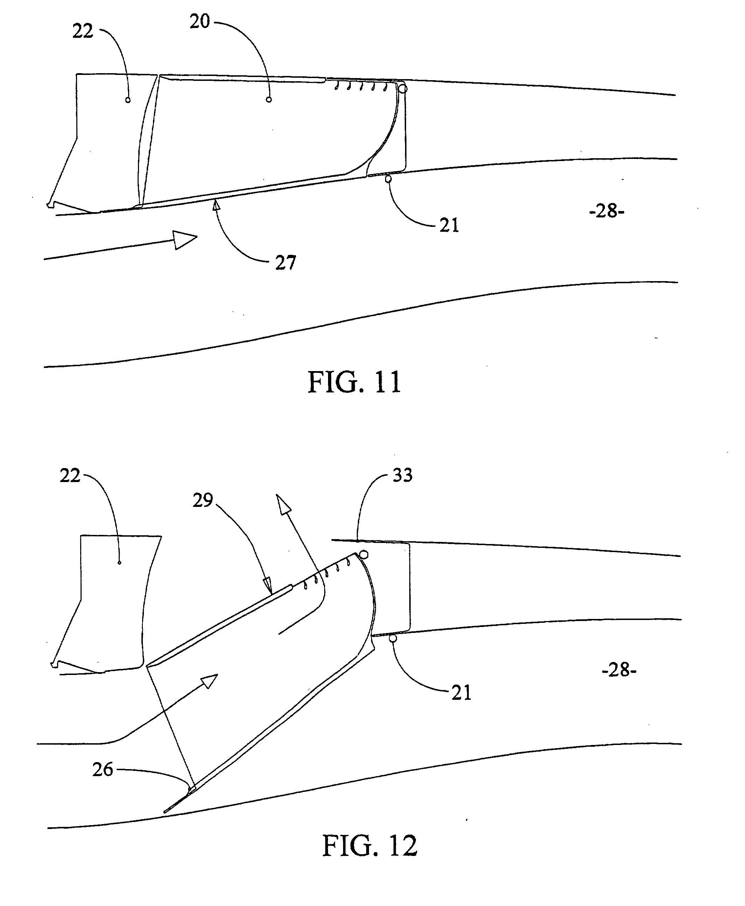

Les figures 11 et 12 montrent une porte tuyère 20 dont les lignes permettent de recevoir dans la partie amont du canal annulaire toute la section du jet d'inversion par la structure interne de la porte 20.

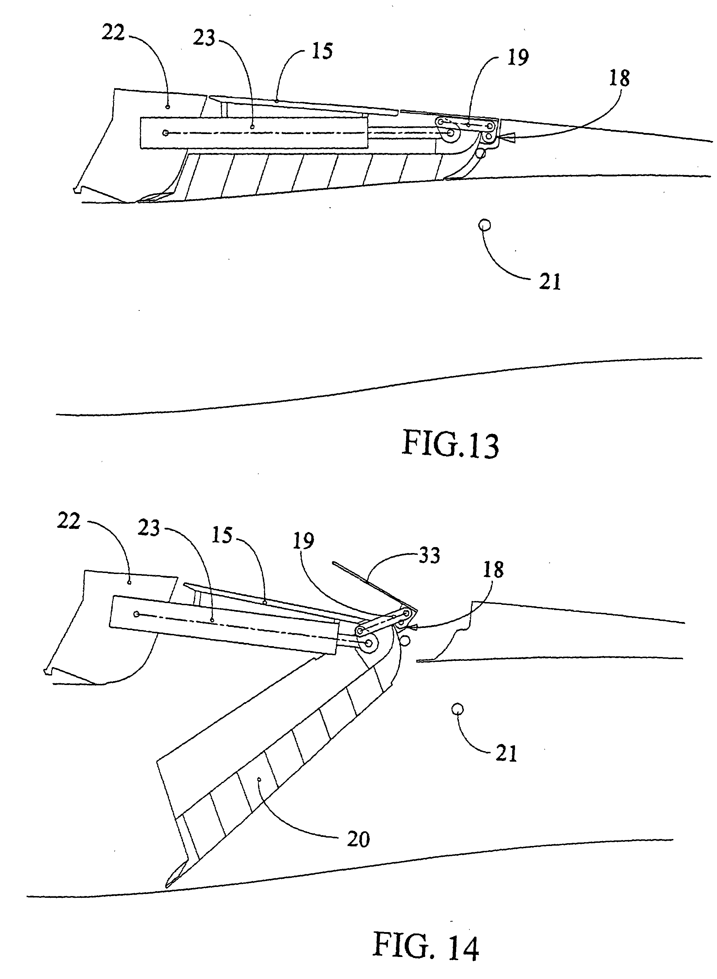

Les figures 13 et 14 montrent un système de manoeuvre 18 de la casquette 33 associée à la porte 20. La manoeuvre est assurée par une ou plusieurs bielles.

La casquette 33 peut être fixée et articulée sur la structure fixe 22 et être entraînée par une ou plusieurs bielle(s) 19 accrochée(s) en un point quelconque de la porte tuyère 20 permettant une rotation vers l'externe de la nacelle à l'ouverture de la porte, mais tout autre système connu de l'homme de métier peut être appliqué comme une mise en action par contact de l'aval de la porte tuyère 20 sur la partie amont du pivot de la casquette 33, celle-ci pouvant revenir dans sa position initiale par l'intermédiaire d'un système de ressort à l'aval de son pivot.

La partie interne de la casquette 33 dans ce cas peut avoir des formes géométriques en interne, et des déflecteurs placés de telle façon qu'ils contribuent à un pilotage de nappes défini.

Les caractéristiques remarquables dans la conception de ladite porte tuyère 20 sont :
toutes les lignes des parois internes peuvent être "aménagées" de façon à répondre au but recherché dans l'efficacité de l'inversion du flux.

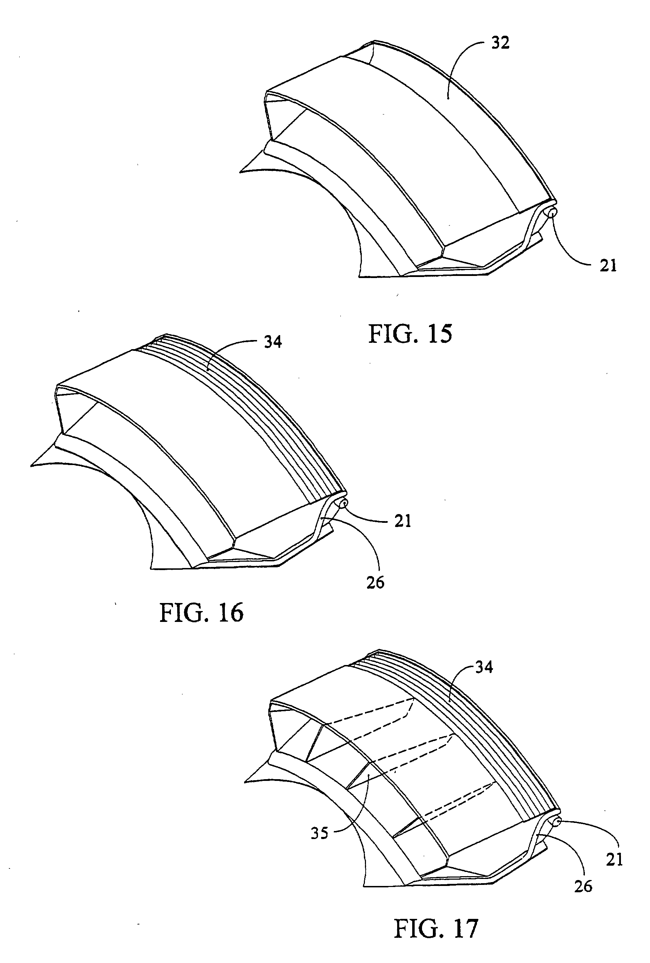

Suivant la figure 15, l'ouverture 32 peut être complètement dégagée et exempte de grille.

Suivant la figure 16, l'ouverture peut comme représenté, comporter des grilles d'aubes 34.
Les grilles sont de conception connue en soi et de forme et orientation adaptée pour répondre au besoin aérodynamique recherché.
Pour obtenir le pilotage de nappes désiré, les orientations des grilles peuvent être longitudinales, en diagonale, comporter des parties pleines ou bien associer une ou plusieurs de ces combinaisons.

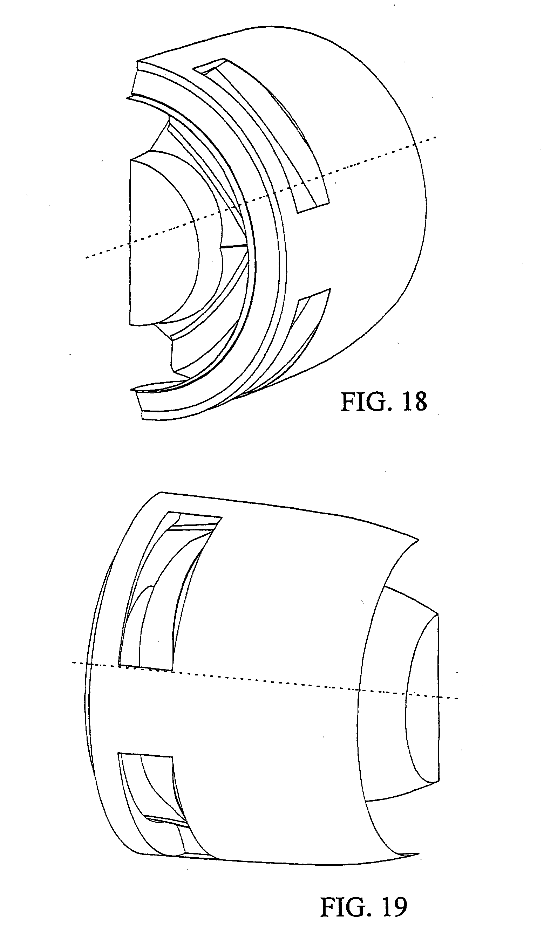

Suivant la figure 17, des cloisons 35 peuvent être installées à l'interne de la porte tuyère 20. Les cloisons 35 sont en nombre, en orientation, en disposition et en longueur définis pour assurer un pilotage de nappes optimal.

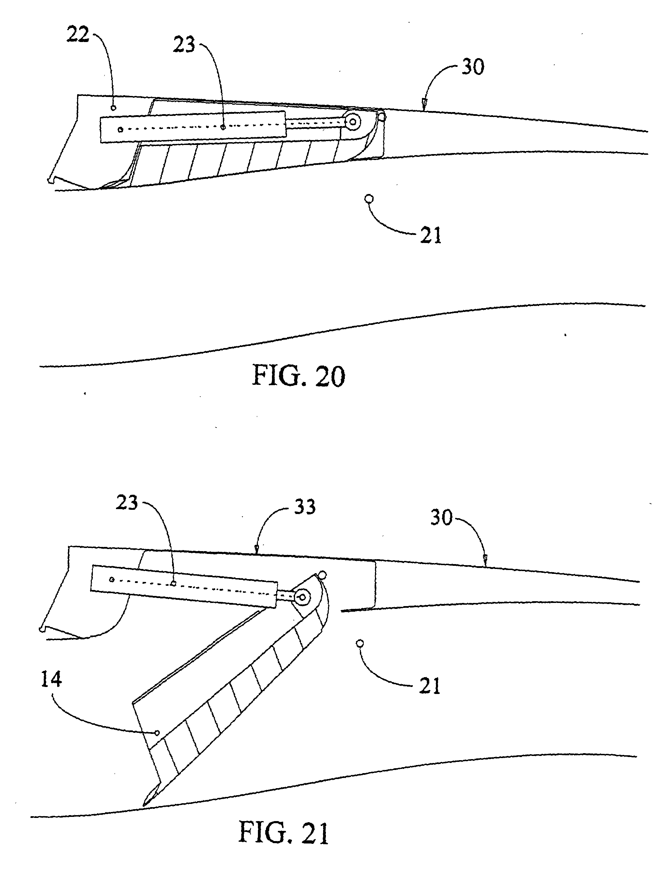

Les figures 20 et 21 montrent une possibilité d'extension de la casquette 33 jusqu'à la structure fixe amont 22, pour le cas d'un entraînement de la porte par un vérin amont central 23. Cette extension permet de ne pas utiliser un carénage vérin 15 comme montré sur les figures 4 et 5 et assure une meilleure continuité de ligne de la nacelle externe.

Le bord aval de l'ouverture d'éjection 32 de la porte 20 peut être non linéaire ou oblique ou de n'importe quelle découpe selon les performances aérodynamiques recherchées en jet inversé. Le détourage de la casquette 33 peut recevoir le même profil de découpe.

Le bord aval de l'ouverture d'éjection 32 de la porte et/ou la structure aval même de la porte 20 peut être non linéaire ou oblique ou de n'importe quelle découpe, selon les performances aérodynamiques recherchées en jet inversé.

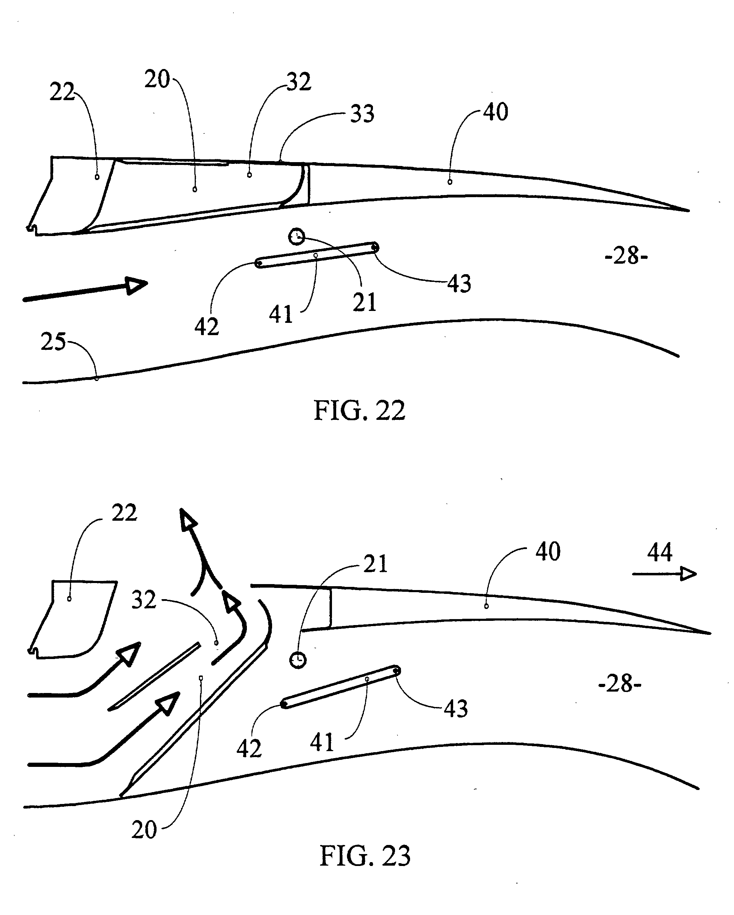

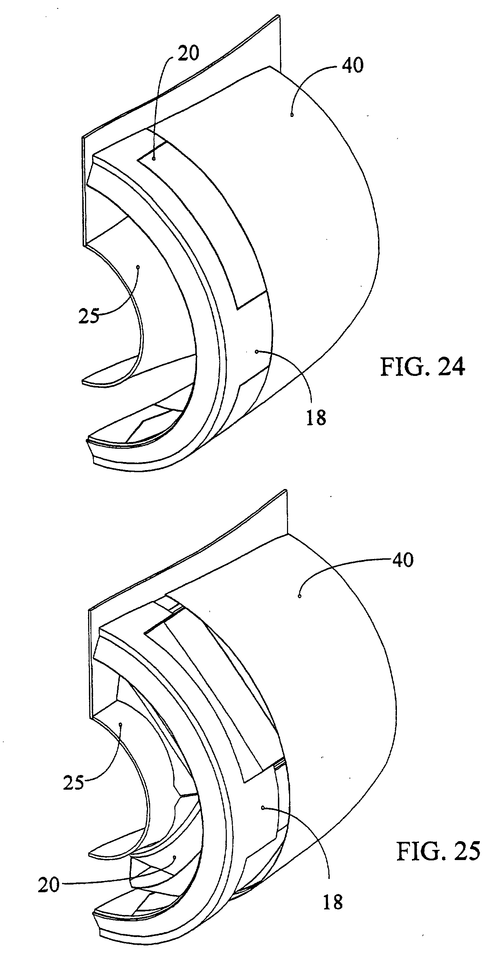

Dans certaines applications, la limitation de la section d'éjection du flux en sortie de la porte 20 imposée lors du fonctionnement en inversion de poussée par la présence de l'élément en casquette 33 de nacelle peut être pénalisante par rapport aux performances recherchées. Un mode de réalisation de l'invention représenté sur les figures 22 à 25 permet d'éviter ces inconvénients en permettant d'augmenter la section d'éjection du flux en sortie de la porte 20, tout en conservant les avantages précédemment relevés dans les modes de réalisation de l'invention précédemment décrits en référence aux figures 2 à 21.

Selon ce mode de réalisation de l'invention représenté sur les figures 22 à 25, une porte tuyère 20, articulée autour d'un axe de rotation 21 porté par les poutres 18 de la structure fixe 22, est relié à une structure arrière mobile 40 par l'intermédiaire d'une ou plusieurs bielles 41. Les bielles sont reliées d'une part à la porte écope 20 en un point 42 et d'autre part à la structure mobile 40 en un point 43.

La structure arrière mobile 40 manoeuvre en translation suivant la flèche 44 vers l'aval de la nacelle selon un mode déjà connu par l'homme de métier comme, des rails entre la structure fixe 22 et la structure mobile 40, et/ou des systèmes vérin/guide installés par exemple dans les poutres de la nacelle.

La manoeuvre de l'ensemble peut se faire, soit par l'intermédiaire de la porte 20 qui entraîne la structure mobile 40 par l'intermédiaire des bielles 41, ou par l'intermédiaire de la structure mobile 40 qui entraîne alors la porte en rotation par l'intermédiaire des bielles 41. Dans ce cas, les systèmes d'entraînement peuvent se situer dans les poutres de la nacelle ou à tout autre endroit de la structure fixe 22.

L'entraînement de la structure arrière mobile 40 et de la porte écope 20 peut être indépendant, synchronisé ou non entre lesdits éléments.

Le type de structure sur laquelle l'invention peut être appliquée est soit du type nacelle complète ou "O" duct ou réalisée en demi-structures ou "D" duct comme cela est le plus couramment utilisé autour d'un moteur.

La longueur de déplacement de la structure mobile 40 est fonction de la longueur de recouvrement de l'ouverture 32 de la porte tuyère 20 par la casquette 33 de la structure mobile 40, celle-ci étant d'autant plus grande que la section d'éjection du flux doit être importante à travers la porte écope 20. La cinématique associée répond au besoin du déplacement en translation de la structure mobile 40 et de la manoeuvre en rotation de la porte écope 20.

Il est possible de réaliser le capotage de l'ouverture 32 de la porte tuyère 20 par une casquette mobile recouvrant une partie de la structure arrière 40, qui dans ce cas est fixe, la porte écope 20 conservant la même structure que celle définie sur les figures 22 et 23.

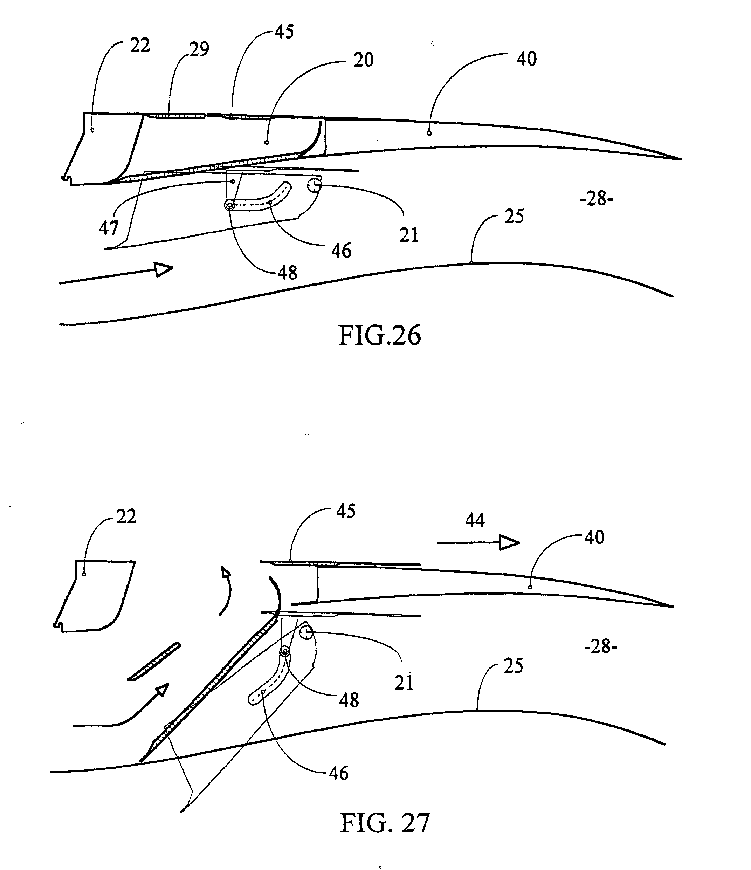

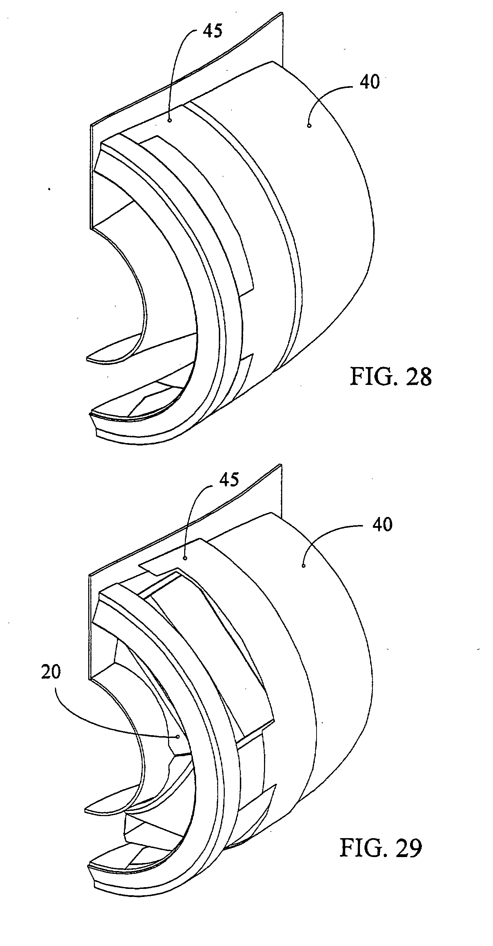

Les figures 26 à 29 représentent un autre mode de réalisation de ce paramètre. Une virole externe mobile 45 réalise une partie des lignes extérieures de la nacelle. Elle recouvre une partie ou la totalité de la porte écope 20 et une partie externe amont de la structure arrière fixe 40. Cette virole 45 est manoeuvrée en translation suivant la flèche 44 par tout système d'entraînement et de guidage connu de l'homme de métier.

Un exemple d'entraînement en rotation de la porte écope 20 par la virole 45 est représenté sur les figures. Celui-ci est constitué par une rampe guide 46, dans ce cas placé en parties latérales de la porte, dont la forme peut permettre une manoeuvre de la porte 20 en fin de déplacement de la virole externe 45 comme pour la définition retenue sur les figures, ou bien avoir n'importe quelle autre définition. Une ou plusieurs rampes peuvent aussi être montées à l'intérieur de la structure de la porte écope 20. Un ou plusieurs supports 47 de système de manoeuvre 48 sont solidaires de la virole externe 45 et lient la manoeuvre de la virole 45 à celle de la rampe guide 46 entraînant la porte écope 20 en rotation autour de son point pivot fixe 21 selon la cinématique imposée par la forme de la rampe guide 46 retenue.
La structure de la porte écope, comme montrée sur les figures, comporte une structure externe 29. Dans certaines applications, la structure externe 29 peut être supprimée et la section courante de la porte s'apparente alors à un "U". Toute la section du puits en phase d'inversion est alors libre d'obstacle.

Il est évident que d'autres technologies de manoeuvre, connues de l'homme de métier, peuvent être appliquées comme par exemple l'entraînement de la porte par un ou plusieurs systèmes d'embiellage entre la virole mobile 45 et la porte écope 20, une bielle étant liée et articulée sur l'interne amont de la virole mobile 45, une seconde bielle étant liée et articulée sur l'interne ou en partie latérale de la structure de la porte écope 20, les deux bielles étant réunies et articulées entre-elles à leurs points opposés. La découpe amont de la virole est rectiligne ou bien réalisée avec un détourage spécifique permettant de répondre au besoin aérodynamique de l'homme de l'art.

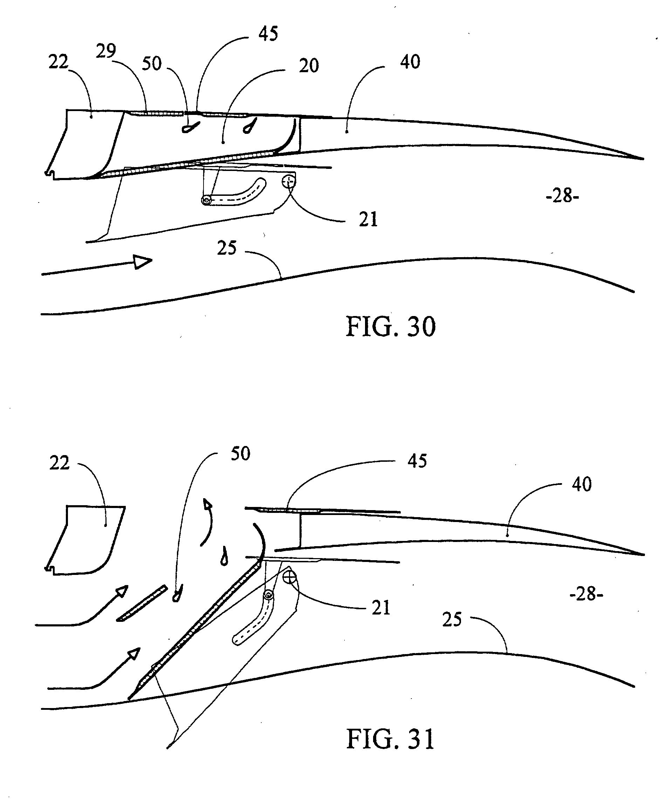

Les figures 30 et 31 montrent la possibilité d'utiliser comme précédemment indiqué en référence à la figure 16 des aubes permettant un meilleur guidage du flux d'inversion mais les aubes 50 peuvent être installées dès l'amont de la structure de la porte 20. la ou les aubes 50 sont contenues à l'intérieur des lignes de la nacelle. En mode d'inversion, elles rencontrent directement le flux circulant dans le canal annulaire 28 et oriente celui-ci selon une direction du flux d'inversion recherchée.
Le nombre, la taille, l'orientation, l'emplacement et la forme peuvent varier d'une porte écope à l'autre, d'une aube à l'autre. Des aubes dans le sens longitudinal peuvent être associées suivant les mêmes paramètres évolutifs.
Il est à noter que ces aubes 50 peuvent être installées aussi bien sur la porte écope 20 que sur la structure fixe 22, soit sur les bords latéraux des poutres, ou à n'importe quel autre endroit sur la structure fixe 22.

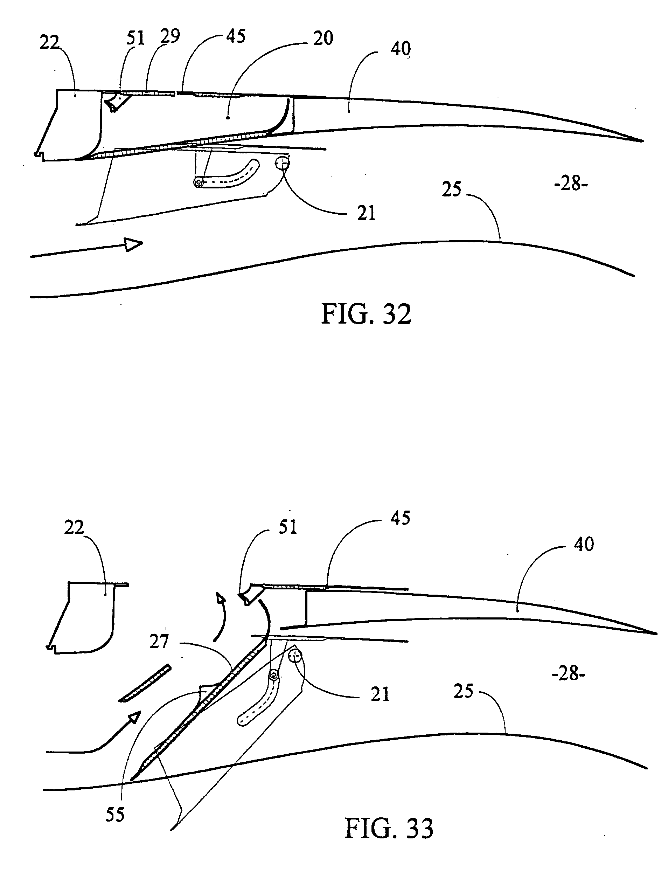

Les figures 32 et 33 montrent un exemple d'association d'ailette à profil aérodynamique 51 solidaire de la virole mobile 45. Une ou plusieurs ailettes 51 sont reliées à l'amont de l'interne de la virole mobile 45 par des supports locaux. Elles peuvent être complètes ou partielles. Leurs emplacements et autres paramètres répondent à des critères aérodynamiques de gestion de l'inversion du flux. Elles peuvent réaliser la continuité de la courbure interne de la porte écope 20 ou en être décalées. Elles peuvent être associées à des aubes déflectrices 50 définies dans les figures 30 et 31.

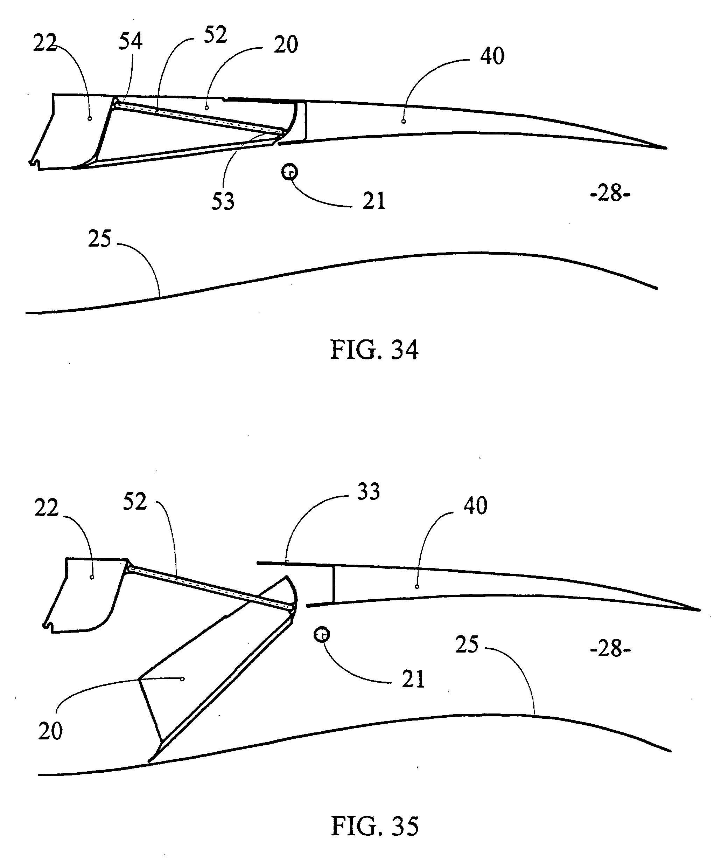

Tous les modes de réalisation de l'invention cités s'appliquent pour des portes écopes 20 à pivots 21 solidaires de la structure fixe 22. Les mêmes paramètres déjà évoqués peuvent s'appliquer pour un concept d'inverseur à portes écopes 20 à pivot 21 associés à la structure arrière mobile 40. Les figures 34 et 35 représentent un mode de réalisation de l'invention suivant cette définition. Une ou plusieurs bielles 52 relient la porte écope 20 en un point d'articulation 53 à l'interne de la structure de la porte écope 20 ou en parties latérales, à la structure fixe 22 en un point d'articulation 54. En manoeuvrant vers l'aval de la nacelle, la structure arrière mobile 40 fait pivoter la porte écope 20 autour de son point pivot 21 par l'intermédiaire de la bielle 52 solidaire de la structure fixe 22 en son point 54 et entraînant ladite porte au point 53.

Dans tous les exemples de réalisation précédemment décrits l'interne 27 de la porte écope 20 peut être réalisée par une forme adaptée permettant d'assurer un guidage de nappes optimal. Elle peut être complétée par une ou plusieurs rampes 55 comme l'exemple représenté sur la figure 33 et comporter une ou plusieurs cloisons d'orientation de taille et de forme permettant de canaliser le flux selon les critères aérodynamiques recherchés par l'homme de métier.

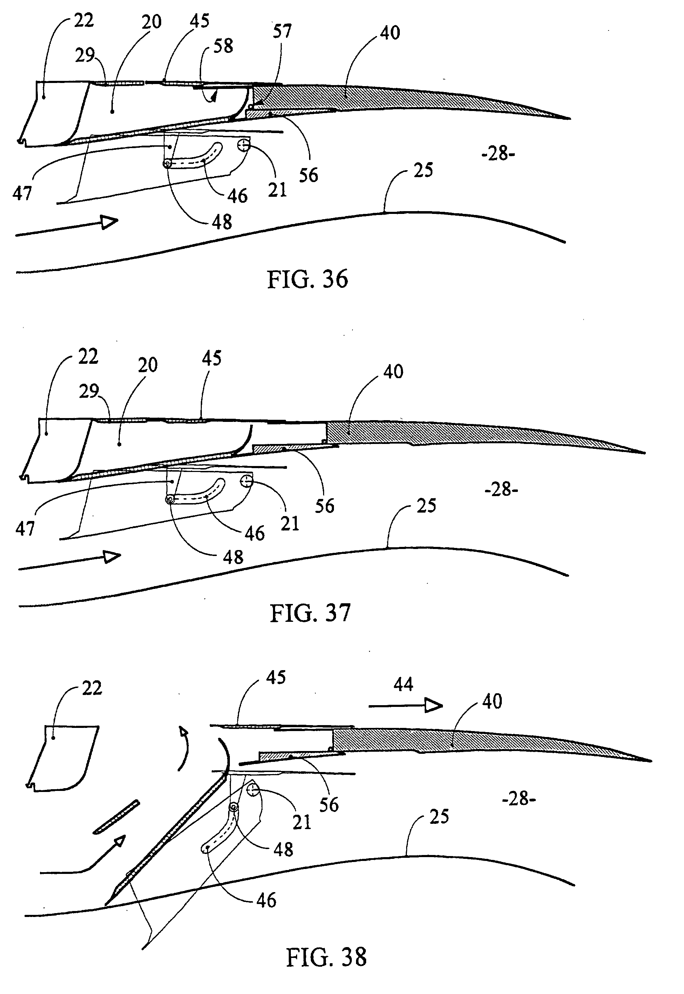

Tous les exemples de l'invention montrés dans les figures 22 à 35 peuvent être associés à une structure permettant la variation de section de tuyère sans nuire aux performances d'inversion recherchées. Les figures 36 à 38 présentent une des variantes de l'invention associée à ce type de concept.

Dans l'exemple proposé sur les figures, l'inverseur est composé en aval des portes 20, d'une structure aval mobile 40 et d'une virole aval fixe 56.
La structure aval mobile 40 réalise une partie des lignes externes de la nacelle et une partie des lignes de veine 28 externe. Elle recouvre tout ou une partie de la structure externe de la virole aval fixe 56.
La virole aval fixe 56 réalise une partie des lignes de veine 28 externe.
Le guidage en translation de la structure aval mobile 40 est de type connu de l'homme de métier comme des glissières pouvant être associées à la virole aval fixe 56 ou encore directement intégrées à la structure fixe amont 22.
L'étanchéité 57 de la structure peut être portée par l'amont interne de la virole aval fixe 56.
En mode jet direct, la structure aval mobile 40 a une partie amont 58 de sa structure recouverte par l'aval de la virole mobile 45. La longueur de recouvrement est fonction du déplacement en translation vers l'aval de la structure aval mobile 40 en mode de variation de section de tuyère.

En mode de variation de section de tuyère représenté sur la figure 37, la structure aval mobile 40 est entraînée par le système de commande répondant le mieux aux besoins de l'homme de métier. La commande de manoeuvre de la structure aval mobile 40 peut être indépendante de celle de l'entraînement de la virole 45. Elle peut avoir une même commande de manoeuvre à double action. Le système de commande peut aussi permettre une inversion directe du flux 28 sans passer par la phase de variation de section de tuyère par le système lui même associé à la logique de commande de l'inverseur. Un verrouillage en translation de la structure aval mobile 40 peut être prévu sur l'interne de la virole 45, sur l'externe de la virole aval fixe 56 ou à tout autre endroit et associé à n'importe quelle autre structure de l'inverseur.
La figure 38 montre la position finale de la structure générale de l'inverseur en mode d'inversion de jet. Dans cette position la virole 45 est représentée avec un recouvrement de l'amont de la structure aval mobile 40 plus important qu'en mode jet direct mais cette disposition peut évoluer notamment si une possibilité de manoeuvre simultanée entre les deux structures existe. Ce recouvrement peut tout aussi bien être moins important si une manoeuvre plus réduite en translation de la virole 45 est nécessaire.

## Revendications

1. Inverseur de poussée de turboréacteur à double flux comportant des portes pivotantes (20), en position fermée, lors d'un fonctionnement en jet direct, s'intégrant dans la paroi extérieure du conduit de flux en arrière de la soufflante de turboréacteur, et en outre chacune pivotant sous l'action d'un moyen de commande (23) des déplacements de manière à constituer des obstacles de déviation de flux lors d'un fonctionnement en inversion de poussée, au moins une porte (20) pivotant autour d'un axe de rotation (21) disposé à son aval, le bord amont de porte pénétrant dans le conduit de flux, **caractérisé en ce que** ladite porte (20) comporte un espace intérieur (37) formant tuyère, entre une première ouverture (36) ménagée au bord amont de porte, entre un panneau intérieur (27) et un panneau extérieur (29) et une deuxième ouverture (32) ménagée du côté aval entre un rebord aval et ledit panneau extérieur (29), la deuxième ouverture (32) étant recouverte en position de jet direct par un élément en casquette (33) solidaire de la partie aval de la structure de l'inverseur, de manière que, en position de jet direct, les efforts exercés par le flux sur ledit panneau intérieur (27) maintiennent la porte (20) dans sa position fermée puis en début d'ouverture, les efforts exercés par le flux sur ledit panneau intérieur (27) conjugués aux efforts exercés par le flux sur la surface interne du panneau extérieur (29) de porte rendent ladite porte (20) auto refermante, et en position de jet inversé, au moins une partie du flux dévié emprunte ledit espace intérieur (37) de porte formant écope, ladite porte (20) restant entièrement à l'intérieur des lignes extérieures de nacelle.

2. Inverseur de poussée de turboréacteur à double flux selon la revendications 1 dans lequel ledit élément en casquette (33) est solidaire d'une partie aval fixe de la structure de l'inverseur et l'axe de rotation (21) formant pivot de la porte (20) est porté par la structure fixe (1) d'inverseur.

3. Inverseur de poussée de turboréacteur à double flux selon la revendication 2 dans lequel la deuxième ouverture (32) ménagée sur la porte (20) est munie de grilles d'aubes (34) destinées à augmenter les performances ou à contribuer au pilotage des nappes du flux inversé.

4. Inverseur de poussée de turboréacteur à double flux selon l'une des revendications 2 ou 3 dans lequel ledit moyen de commande des déplacements de porte est constitué par au moins un vérin (23) fixé de manière articulée sur la structure fixe amont (1) de l'inverseur et placé, en position de jet direct, dans un logement (14) ménagé dans la partie radialement extérieure de porte et portant un carénage (15) assurant la continuité des lignes extérieures de nacelle en jet direct.

5. Inverseur de poussée de turboréacteur à double flux selon l'une des revendications 2 ou 3 dans lequel ledit moyen de commande des déplacements de porte est constitué par au moins un vérin (23) fixé de manière articulée sur la structure fixe amont (22) de l'inverseur et placé, en position de jet direct, dans un logement (14) ménagé dans la partie radialement extérieure de porte, ledit élément en casquette (33) solidaire de la partie aval de la structure fixe de l'inverseur assurant, en jet direct, la couverture dudit logement dans la continuité des lignes extérieures de nacelle.

6. Inverseur de poussée de turboréacteur à double flux selon l'une des revendications 2 ou 3 dans lequel ledit moyen de commande des déplacements de porte est constitué par au moins un vérin (23) fixé de manière articulée sur la partie aval de structure fixe d'inverseur.

7. Inverseur de poussée de turboréacteur à double flux selon l'une des revendications 2 ou 3 dans lequel ledit moyen de commande des déplacements de porte est constitué par au moins un vérin (23) disposé à l'intérieur du capot primaire (25) du turboréacteur et relié par un ensemble de bielles comportant une articulation solidaire dudit capot primaire (25) et une articulation solidaire du panneau intérieur (27) de la porte (20).

8. Inverseur de poussée de turboréacteur à double flux selon l'une des revendications 2 ou 3 dans lequel ladite première ouverture ménagée au bord amont de porte reçoit la totalité du flux inversé dans la position d'inversion de poussée.

9. Inverseur de poussée de turboréacteur à double flux selon l'une quelconque des revendications 1 à 8 dans lequel ledit élément en casquette est déplaçable grâce à un déplacement lié à celui de la porte (20) entre une position de jet direct où ladite casquette est situé en continuité avec les lignes extérieures de nacelle et une position de jet inversé où ladite casquette contribue au pilotage des nappes du flux inversé, le bord amont de casquette étant déployé à l'extérieur des lignes de nacelle.

10. Inverseur de poussée de turboréacteur à double flux selon l'une quelconque des revendications 1 à 9 dans lequel une pluralité de cloisons (35) sont disposées dans l'espace intérieur de la porte (20) de manière à assurer un pilotage optimal des nappes du flux inversé.

11. Inverseur de poussée de turboréacteur à double flux selon la revendication 1 dans lequel l'élément en casquette (33) recouvrant la deuxième ouverture (32) de la porte (20) en jet direct est solidaire d'une structure arrière (40) mobile en translation vers l'aval de manière à augmenter la section d'éjection du flux en sortie de la porte (20) lors d'un fonctionnement en inversion de poussée et l'axe de rotation (21) formant pivot de la porte (20) est porté par une poutre (18) de la structure fixe d'inverseur.

12. Inverseur de poussée de turboréacteur à double flux selon la revendication 11 dans lequel la porte (20) et la structure arrière mobile (40) sont reliées par des bielles (41).

13. Inverseur de poussée de turboréacteur à double flux selon la revendication 1 dans lequel la partie aval (40) de la structure de l'inverseur est fixe et une virole externe (45) réalise une partie des lignes extérieures de nacelle en jet direct et recouvre au moins une partie de la porte (20) et une partie amont de la structure aval fixe (40) tandis que ladite virole externe (45) est déplacée en translation vers l'aval de manière à dégager la section d'éjection du flux lors du fonctionnement en inversion de poussée.

14. Inverseur de poussée de turboréacteur à double flux selon la revendication 13 dans lequel au moins un support (47) solidaire de ladite virole externe (45) coopère avec au moins une rampe guide (46) disposée sur la porte (20).

15. Inverseur de poussée de turboréacteur à double flux selon l'une des revendications 13 ou 14 dans lequel des aubes déflectrices (50) sont installées sur la porte (20).

16. Inverseur de poussée de turboréacteur à double flux selon l'une quelconque des revendications 13 à 15 dans lequel des aubes déflectrices sont installées sur la structure fixe de l'inverseur.

17. Inverseur de poussée de turboréacteur à double flux selon l'une quelconque des revendications 13 à 16 dans lequel au moins une ailette (51) à profil aérodynamique est placée sur le bord amont de ladite virole externe (45).

18. Inverseur de poussée de turboréacteur à double flux selon la revendication 1 **caractérisé en ce qu'**au moins une porte (20) pivote, par l'intermédiaire d'une bielle (52) articulée sur la structure fixe (22) de l'inverseur, autour d'un axe de rotation (21) disposé à son aval et solidaire d'une structure arrière (40) mobile en translation vers l'aval.

19. Inverseur de poussée de turboréacteur à double flux selon la revendication 1 dans lequel une virole externe (45) réalise une partie des lignes extérieures de nacelle en jet direct et recouvre au moins une partie de la porte (20) et une partie amont de la structure aval qui comprend une virole aval fixe (56) formant une partie de la paroi radialement externe du conduit annulaire de veine (28) et une structure aval mobile (40) en translation vers l'aval de manière que, suivant un premier mode de fonctionnement, en jet direct, ladite structure aval mobile (40) occupe une position amont et la partie amont de la structure aval mobile (40) recouvre ladite virole aval fixe (56), suivant un deuxième mode de fonctionnement, la porte (20) conserve sa position fermée, la virole externe (45) conserve sa position amont recouvrant la porte (20) et la structure aval mobile (40) après translation sous l'action d'un moyen d'entraînement occupe une position aval en réalisant une variation de section de tuyère d'éjection et suivant un troisième mode de fonctionnement, la structure aval mobile (40) occupe sa position aval tandis que la virole externe (45) est déplacée en translation vers l'aval en dégageant la section d'éjection du flux dévié par la porte (20) pivotant en position d'obstacle de déviation (autour d'un pivot (21) porté par la structure fixe (22) d'inverseur, en réalisant l'inversion de poussée.

## Patentansprüche

1. Schubumkehrvorrichtung für Zweikreis-TL-Triebwerk mit Schwenkklappen (20), die sich in Schließstellung im Direktstrahlbetrieb in die Außenwand der Strömungsleitung hinter dem Turbotriebwerks-Gebläse einfügen und ferner jeweils unter der Einwirkung eines Bewegungs-Steuermittels (23) dergestalt schwenken, dass sie im Umkehrschubbetrieb Strömungs-Umlenkhindernisse bilden, wobei mindestens eine Klappe (20) um eine Drehachse (21) schwenkt, die an ihrer Hinterseite angeordnet ist, wobei die Klappenvorderkante in die Strömungsleitung eindringt,
**dadurch gekennzeichnet,**
**dass** diese Klappe (20) einen Innenraum (37) enthält, der eine Rohrleitung bildet, und zwar zwischen einer ersten Öffnung (36), die an der Klappenvorderkante zwischen einer Innenplatte (27) und einer Außenplatte (29) ausgeführt ist, und einer zweiten Öffnung (32), die an der hinteren Seite zwischen einer hinteren Umschlagkante und der genannten Außenplatte (29) ausgeführt ist, wobei die zweite Öffnung (32) in der Direktstrahlstellung von einem Kappenelement (33) überdeckt wird, das mit dem hinteren Teil des Aufbaus der Schubumkehrvorrichtung fest verbunden ist, so dass in der Direktstrahlstellung die von der Strömung auf die genannte Innenplatte (27) ausgeübten Kräfte die Klappe (20) in ihrer Schließstellung halten bis zum Beginn eines Öffnens, wobei die von der Strömung auf die genannte Innenplatte (27) ausgeübten Kräfte im Verein mit den von der Strömung auf die Innenfläche der Außenplatte (29) der Klappe ausgeübten Kräften dafür sorgen, dass diese Klappe (20) sich selbst wieder schließt, und in Umkehrschubstellung strömt mindestens ein Teil des umgelenkten Stroms durch den Innenraum (37) der Klappe, die Kanäle formt, wobei diese Klappe (20) gänzlich innerhalb der Außenlinien der Gondel bleibt.

2. Schubumkehrvorrichtung für Zweikreis-TL-Triebwerk nach Anspruch 1, bei der das genannte Kappenelement (33) mit einem festen hinteren Teil des Aufbaus der Schubumkehrvorrichtung fest verbunden ist und die Drehachse (21), die die Drehachse der Klappe (20) bildet, an dem festen Aufbau (1) der Schubumkehrvorrichtung sitzt.

3. Schubumkehrvorrichtung für Zweikreis-TL-Triebwerk nach Anspruch 2, bei der die zweite Öffnung (32), die an der Klappe (20) ausgeführt ist, mit Schaufelgittern (34) versehen ist, die dazu bestimmt sind, die Leistungen zu erhöhen oder zur Steuerung der Ströme des Umkehrstroms beizutragen.

4. Schubumkehrvorrichtung für Zweikreis-TL-Triebwerk nach einem der Ansprüche 2 oder 3, bei der das genannte Klappenbewegungs-Steuermittel aus mindestens einem Zylinder (23) besteht, der mit Gelenk an dem vorderen festen Aufbau (1) der Schubumkehrvorrichtung befestigt ist und in der Direktstrahlstellung in eine Aufnahme (14) gebracht wird, die in dem radial äußeren Teil der Klappe ausgeführt ist und eine Verkleidung (15) aufweist, die die Kontinuität der Außenlinien der Gondel und in Direktstrahlstellung gewährleistet.

5. Schubumkehrvorrichtung für Zweikreis-TL-Triebwerk nach einem der Ansprüche 2 oder 3, bei der das genannte Klappenbewegungs-Steuermittel aus mindestens einem Zylinder (23) besteht, der mit Gelenk an dem vorderen festen Aufbau (22) der Schubumkehrvorrichtung befestigt ist und in der Direktstrahlstellung in eine Aufnahme (14) gebracht wird, die in dem radial äußeren Teil der Klappe ausgeführt ist, wobei das genannte Kappenelement (33), das mit dem hinteren Teil des festen Aufbaus der Schubumkehrvorrichtung fest verbunden ist, in Direktstrahlstellung die Bedeckung dieser Aufnahme in Kontinuität der Außenlinien der Gondel gewährleistet.

6. Schubumkehrvorrichtung für Zweikreis-TL-Triebwerk nach einem der Ansprüche 2 oder 3, bei der das genannte Klappenbewegungs-Steuermittel aus mindestens einem Zylinder (23) besteht, der mit Gelenk an dem hinteren Teil des festen Aufbaus der Schubumkehrvorrichtung befestigt ist.

7. Schubumkehrvorrichtung für Zweikreis-TL-Triebwerk nach einem der Ansprüche 2 oder 3, bei der das genannte Klappenbewegungs-Steuermittel aus mindestens einem Zylinder (23) besteht, der innerhalb des Hauptmantels (25) des Turbotriebwerks angeordnet ist und durch eine Anordnung von Stangen verbunden ist, die ein Gelenk aufweist, das mit diesem Hauptmantel (25) fest verbunden ist, und ein Gelenk aufweist, das mit der Innenplatte (27) der Klappe (20) fest verbunden ist.

8. Schubumkehrvorrichtung für Zweikreis-TL-Triebwerk nach einem der Ansprüche 2 oder 3, bei der die genannte erste Öffnung, die an der Klappenvorderkante ausgeführt ist, in der Schubumkehrstellung den gesamten Umkehrstrom aufnimmt.

9. Schubumkehrvorrichtung für Zweikreis-TL-Triebwerk nach einem der Ansprüche 1 bis 8, bei der das genannte Kappenelement mit einer Bewegung, die mit der der Klappe (20) verbunden ist, zwischen einer Direktstrahlstellung, in der dieses Kappenelement sich in Kontinuität mit den Außenlinien der Gondel befindet, und einer Schubumkehrstellung, in der dieses Kappenelement zur Steuerung der Ströme des Umkehrstroms beiträgt, wobei die Vorderkante des Kappenelements nach außerhalb der Außenlinien der Gondel ausgeklappt wird, verschiebbar ist.

10. Schubumkehrvorrichtung für Zweikreis-TL-Triebwerk nach einem der Ansprüche 1 bis 9, bei der mehrere Trennwänden (35) in dem Innenraum der Klappe (20) dergestalt angeordnet sind, dass sie ein optimales Steuern der Ströme des Umkehrstroms gewährleisten.

11. Schubumkehrvorrichtung für Zweikreis-TL-Triebwerk nach Anspruch 1, bei der das Kappenelement (33), das die zweite Öffnung (32) der Klappe (20) im Direktstrahlbetrieb bedeckt, fest mit einem hinteren Aufbau (40) verbunden ist, der in Vorschubrichtung nach hinten verschiebbar ist, so dass der Ausstoßabschnitt des Strahls am Austritt der Klappe (20) bei Schubumkehrbetrieb vergrößert wird, und die Drehachse (21), die die Drehachse der Klappe (20) bildet, an einem Träger (18) des festen Aufbaus der Schubumkehrvorrichtung sitzt.

12. Schubumkehrvorrichtung für Zweikreis-TL-Triebwerk nach Anspruch 1, bei der die Klappe (20) und der hintere, bewegbare Aufbau (40) durch Stangen (41) miteinander verbunden sind.

13. Schubumkehrvorrichtung für Zweikreis-TL-Triebwerk nach Anspruch 1, bei der der hintere Teil (40) des Aufbaus der Schubumkehrvorrichtung feststehend ist und ein Außenring (45) einen Teil der Außenlinien der Gondel in Direktstrahlstellung bildet und mindestens einen Teil der Klappe (20) und einen vorderen Teil des festen hinteren Aufbaus (40) überdeckt, während dieser Außenring (45) bei Umkehrschubbetrieb in Vorschubbewegung nach hinten verschoben wird, so dass er den Ausstoßabschnitt des Strahls freigibt.

14. Schubumkehrvorrichtung für Zweikreis-TL-Triebwerk nach Anspruch 13, bei der mindestens ein Tragelement (47), das mit diesem Außenring (45) fest verbunden ist, mit mindestens einer Führungsrampe (46), die an der Klappe (20) angeordnet ist, zusammenwirkt.

15. Schubumkehrvorrichtung für Zweikreis-TL-Triebwerk nach einem der Ansprüche 13 oder 14, bei der an der Klappe (20) Umlenkschaufeln (50) angebracht sind.

16. Schubumkehrvorrichtung für Zweikreis-TL-Triebwerk nach einem der Ansprüche 13 bis 15, bei der an dem festen Aufbau der Schubumkehrvorrichtung Umlenkschaufeln angebracht sind.

17. Schubumkehrvorrichtung für Zweikreis-TL-Triebwerk nach einem der Ansprüche 13 bis 16, bei der mindestens eine Rippe (51) mit aerodynamischem Profil an der Vorderkante des genannten Außenring (45) aufgesetzt ist.

18. Schubumkehrvorrichtung für Zweikreis-TL-Triebwerk nach Anspruch 1,
**dadurch gekennzeichnet,**
**dass** mindestens eine Klappe (20) mittels einer Stange (52), die mit Gelenk an dem festen Aufbau (22) der Schubumkehrvorrichtung befestigt ist, um eine Drehachse (21) schwenkt, die an ihrer Hinterseite angeordnet ist und fest mit einem hinteren Aufbau (40) verbunden ist, der in Vorschubbewegung nach hinten verschiebbar ist.

19. Schubumkehrvorrichtung für Zweikreis-TL-Triebwerk nach Anspruch 1, bei der ein Außenring (45) in Direktstrahlstellung einen Teil der Außenlinien der Gondel bildet und mindestens einen Teil der Klappe (20) und einen vorderen Teil des hinteren Aufbaus überdeckt, der einen festen, hinteren Ring (56) umfasst, der einen Teil der radial äußeren Wand der Ringleitung der Strömungsbahn (28) bildet, sowie einen bewegbaren, hinteren Aufbau (40), der eine Vorschubbewegung nach hinten dergestalt ausführen kann, dass gemäß einer ersten Betriebsart, im Direktstrahlbetrieb, dieser bewegbare, hintere Aufbau (40) eine vordere Position einnimmt, und der vordere Teil des bewegbaren, hinteren Aufbaus (40) diesen festen, hinteren Ring (56) überdeckt, dass gemäß einer zweiten Betriebsart die Klappe (20) ihre Schließstellung beibehält, der Außenring (45) seine vordere Position beibehält, in der er die Klappe (20) überdeckt, und der bewegbare, hintere Aufbau (40) nach einer Vorschubbewegung unter der Einwirkung eines Antriebsmittels eine hintere Position einnimmt, wobei eine Veränderung des Ausstoßrohrabschnitts erzeugt wird, und dass gemäß einer dritten Betriebsart der bewegliche, hintere Aufbau (40) seine hintere Position einnimmt, während der Außenring (45) in einer Vorschubbewegung nach hinten verschoben wird, wobei er den Ausstoßabschnitt des Strahls freigibt, welcher durch die Klappe (20) umgelenkt wird, die um eine an dem festen Aufbau (22) der Schubumkehrvorrichtung sitzende Drehachse (21) in ihre Stellung als Umlenkhindernis schwenkt und damit die Schubumkehr bewirkt.

## Claims

1. Bypass turbofan thrust reverser comprising pivoting doors (20) in the closed position, during operation in direct jet mode, incorporated into the outer wall of the flow duct behind the turbofan fan, and each one also pivoting under the action of a movement-control means (23) so as to constitute obstacles deflecting the stream during operation in reverse thrust mode, at least one door (20) pivoting about a rotation axle (21) arranged downstream of it, the upstream door edge entering the flow duct, **characterized in that** the said door (20) has an interior space (37) forming a nozzle, between a first opening (36) formed in the upstream edge of the door between an interior panel (27) and an exterior panel (29) and a second opening (32) produced on the downstream side between a downstream rim and the said exterior panel (29), the second opening (32) being covered in the direct jet position by a spoiler element (33) secured to the downstream part of the reverser structure so that, in the direct jet position, the forces exerted by the stream on the said interior panel (27) keep the door (20) in its closed position then, at the start of opening, the forces exerted by the stream on the said interior panel (27) combined with the forces exerted by the stream on the internal surface of the exterior door panel (29) render the said door (20) self-reclosing and, in the reverse jet position, at least some of the deflected stream takes a path through the said interior space (37) of the door forming a scoop, the said door (20) remaining entirely within the exterior lines of the nacelle.

2. Bypass turbofan thrust reverser according to Claim 1 in which the said spoiler element (33) is secured to a fixed downstream part of the structure of the reverser and the rotation axle (21) forming a pivot for the door (20) is borne by the reverser fixed structure (1).

3. Bypass turbofan thrust reverser according to Claim 2 in which the second opening (32) formed on the door (20) is equipped with cascades of vanes (34) which are intended to enhance performance or to play a part in guiding the layers of the reversed flow.

4. Bypass turbofan thrust reverser according to one of Claims 2 and 3 in which the said means for controlling the movements of the door consists of at least one ram (23) fixed in an articulated manner to the upstream fixed structure (1) of the reverser and placed, in the direct jet position, in a housing (14) formed in the radially exterior part of the door and bearing a cowling (15) ensuring the continuity of the exterior lines of the nacelle in direct jet mode.

5. Bypass turbofan thrust reverser according to one of Claims 2 and 3 in which the said means for controlling the movements of the door consists of at least one ram (23) fixed in an articulated manner to the upstream fixed structure (22) of the reverser and placed, in the direct jet position, in a housing (14) formed in the radially exterior part of the door, the said spoiler element (33) secured to the downstream part of the fixed structure of the reverser providing coverage, in direct jet mode, for the said housing in the continuity of the exterior lines of the nacelle.

6. Bypass turbofan thrust reverser according to one of Claims 2 and 3 in which the said means for controlling the movements of the door consists of at least one ram (23) fixed in an articulated manner to the downstream part of the reverser fixed structure.

7. Bypass turbofan thrust reverser according to one of Claims 2 and 3 in which the said means for controlling the movements of the door consists of at least one ram (23) arranged inside the primary cowl (25) of the turbofan and connected by a set of link rods comprising an articulation secured to the said primary cowl (25) and an articulation secured to the interior panel (27) of the door (20).

8. Bypass turbofan thrust reverser according to one of Claims 2 and 3 in which the said first opening made at the upstream edge of the door takes all the reversed flow in the reverse thrust position.

9. Bypass turbofan thrust reverser according to any one of Claims 1 to 8 in which the said spoiler element can be moved by virtue of a movement linked to that of the door (20) between a direct jet position in which the said spoiler lies in the continuity of the exterior lines of the nacelle and a reverse jet position in which the said spoiler contributes to guiding the layers of the reversed flow, the upstream edge of the spoiler being deployed outside the lines of the nacelle.

10. Bypass turbofan thrust reverser according to any one of Claims 1 to 9 in which a plurality of partitions (35) are arranged in the interior space of the door (20) so as to provide optimum guidance for the layers of the reversed flow.

11. Bypass turbofan thrust reverser according to Claim 1 in which the spoiler element (33) covering the second opening (32) of the door (20) in direct jet mode is secured to a rear structure (40) able to move in translation in the downstream direction so as to increase the cross section for ejection of the flow leaving the door (20) during operation in reverse thrust mode and the rotation axle (21) forming the pivot for the door (20) is borne by a beam (18) of the reverser fixed structure.

12. Bypass turbofan thrust reverser according to Claim 11 in which the door (20) and the moving rear structure (40) are connected by link rods (41).

13. Bypass turbofan thrust reverser according to Claim 1 in which the downstream part (40) of the reverser structure is fixed and an external case ring (45) forms some of the exterior lines of the nacelle in direct jet mode and covers at least part of the door (20) and an upstream part of the fixed downstream structure (40) whereas the said external case ring (45) is moved in terms of translation in the downstream direction so as to uncover the cross section for the ejection of the flow during operation in reverse thrust mode.

14. Bypass turbofan thrust reverser according to Claim 13 in which at least one support (47) secured to the said external case ring (45) collaborates with at least one guide ramp (46) arranged on the door (20).

15. Bypass turbofan thrust reverser according to one of Claims 13 and 14 in which deflector vanes (50) are installed on the door (20).

16. Bypass turbofan thrust reverser according to any one of Claims 13 to 15 in which deflector vanes are installed on the fixed structure of the reverser.

17. Bypass turbofan thrust reverser according to any one of Claims 13 to 16 in which at least one aerodynamically profiled fin (51) is placed on the upstream edge of the said external case ring (45).

18. Bypass turbofan thrust reverser according to Claim 1, **characterized in that** at least one door (20) pivots, via a link rod (52) articulated to the fixed structure (22) of the reverser, about a rotation axle (21) arranged downstream of it and secured to a rear structure (40) able to move in translation in the downstream direction.

19. Bypass turbofan thrust reverser according to Claim 1 in which an external case ring (45) forms part of the exterior lines of the nacelle in the direct jet mode and covers at least part of the door (20) and an upstream part of the downstream structure which comprises a fixed downstream case ring (56) forming part of the radially external wall of the annular flow duct (28), and a downstream structure (40) able to move in terms of translation in the downstream direction so that, according to a first mode of operation, in direct jet mode, the said moving downstream structure (40) occupies an upstream position and the upstream part of the moving downstream structure (40) covers the said fixed downstream case ring (56), according to a second mode of operation, the door (20) maintains its closed position, the external case ring (45) maintains its upstream position covering the door (20) and the moving downstream structure (40), following translational movement under the action of a drive means, occupies a downstream position varying the cross section of the jet pipe and, according to a third mode of operation, the moving downstream structure (40) occupies its downstream position while the external case ring (45) is moved in terms of translation in the downstream direction uncovering the cross section for the ejection of the flow deflected by the door (20) pivoting into a deflection-obstacle position about a pivot (21) borne by the reverser fixed structure (22), thus reversing the thrust.
